(19) **Europäisches Patentamt / European Patent Office / Office européen des brevets**

(11) **EP 4 660 332 A1**

(12) **EUROPEAN PATENT APPLICATION**

(43) Date of publication:
**10.12.2025 Bulletin 2025/50**

(21) Application number: 25180263.3

(22) Date of filing: **02.06.2025**

(51) International Patent Classification (IPC):
$C22B \ 3/16^{(2006.01)}$     $C01F \ 17/10^{(2020.01)}$
$C01F \ 17/17^{(2020.01)}$     $C22B \ 7/00^{(2006.01)}$
$C22B \ 59/00^{(2006.01)}$     $C22B \ 3/20^{(2006.01)}$

(52) Cooperative Patent Classification (CPC):
**C22B 59/00; C01F 17/10; C01F 17/17; C22B 3/16; C22B 3/20; C22B 7/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.06.2024 FR 2405774**

(71) Applicant: **SNF SA**
**42160 Andrezieux-Bouthéon (FR)**

(72) Inventors:
• **KIEFFER, Johann**
  **42160 ANDRÉZIEUX-BOUTHÉON (FR)**
• **ROUX, Christophe**
  **42160 ANDRÉZIEUX-BOUTHÉON (FR)**
• **BATONNIER, Vincent**
  **42160 ANDRÉZIEUX-BOUTHÉON (FR)**

(74) Representative: **Plasseraud IP**
**104 Rue de Richelieu**
**CS92104**
**75080 Paris Cedex 02 (FR)**

(54) **PROCESS FOR SEPARATING RARE-EARTH METALS IN ADMIXTURE IN AQUEOUS SOLUTION**

(57)     The invention relates to a process for separating two elements **E1** and **E2,** chosen from rare-earth metals, in admixture in aqueous solution **AS.** The process uses at least one dithiocarbamate salt.

**EP 4 660 332 A1**

**Description**

**FIELD OF THE INVENTION**

The present invention relates to a process for separating at least two elements chosen from lanthanides, scandium and yttrium, in admixture in aqueous solution.

**PRIOR ART**

The rare-earth metals are formed of 17 elements: 15 lanthanides: lanthanum; cerium; praseodymium; neodymium; promethium; samarium; europium; gadolinium; terbium; dysprosium; holmium; erbium; thulium; ytterbium and lutetium, and also scandium and yttrium. The light rare-earth metals are used for their exceptional magnetic properties, and the heavy rare-earth metals (those with the greatest value) are used to push back the temperature point at which magnets lose their magnetism.

They are ubiquitous, especially in four industrial sectors that represent 10% of the global economy: digital (cell phones, hard disks, screens); energy (offshore wind turbines, electric and hybrid car engines); medical (apparatus, robots); weapons.

Their uses are diversified: the first (31%) being permanent magnets (used in generators, flywheels, alternators, toy and watch motors); catalysts (18%) (used in catalytic converters in cars); metallurgical alloys (18%) (used in aeronautical, military and medical construction, etc.); polishing (13%) (used on the surface of many industrial products); glass and ceramics (11%); the remainder representing 9%.

Permanent magnets are enjoying unbridled growth. Wind power and low-carbon mobility consume 35% of the global market thereof, with China accounting for 91% of production. Their strong growth (consumption will triple by 2030 for wind power, and will increase tenfold for electric vehicles) may come up against a limited supply of rare-earth metals.

There are many methods for purifying an isolated element from rare-earth metals. For example, complexing agents such as diethyl dithiocarbamate and pyrrolidine dithiocarbamate (see FR 2 614 213) allow impurities such as iron and cobalt to be removed from aqueous solutions. There are methods for extraction using organic solvents after complexation of an element among the rare-earth metals. It is also possible to react an element among the rare-earth metals with a molecule (oxalate, carbonate, tris(2-aminoethyl)amine) to form an insoluble complex and then perform a liquid-solid separation.

Rare-earth metals have similar physical and chemical properties. As a result, it is difficult to separate each element from a mixture containing several elements of the rare-earth metal series. The methods described previously do not allow an element among a mixture of elements containing at least two elements among the rare-earth metals to be isolated. There are a few methods for isolating an element from among a mixture of rare-earth elements, but they require complex and energy-intensive reaction conditions (for example, heating, combustion, electrolysis, reaction with toxic chlorinated gases: see documents JP5401497, JP5836349, JP6789910).

**DISCLOSURE OF THE INVENTION**

The Applicant has found and developed a simple, low-cost process which allows the separation of two elements among the rare-earth metals in admixture in aqueous solution.

More specifically, the invention is a process for separating two elements **E1** and **E2,** chosen from rare-earth metals, in admixture in aqueous solution **AS,** said process involving the following successive steps:

a) adding to the aqueous solution **AS** at least one dithiocarbamate salt of formula: $R1R2NCS_2^-M^+$, in which M is an alkali metal cation, the groups R1 and/or R2 are chosen from the group comprising a hydrogen atom, a methyl group, a linear, branched or cyclic, saturated or unsaturated, substituted or unsubstituted carbon chain including from 2 to 20 carbon atoms, which may include one or more heteroatoms chosen from nitrogen and oxygen, the groups R1 and R2 together may form a ring;

b) stirring the aqueous solution obtained in step a) for at least 1 minute;

c) stopping the stirring and waiting at least 5 minutes for a suspension **S** to form;

d) performing a liquid/solid separation on the suspension **S** to obtain a solid **SO** predominately containing element **E1** relative to element **E2** and an aqueous solution **AS'** predominantly containing element **E2** relative to element **E1.**

The term "predominantly" means a ratio **E1/E2,** included in the solid **SO,** greater than 1/1, notably greater than 1.5/1.

The term "predominantly" means a ratio **E2/E1,** included in the aqueous solution **AS',** greater than 1/1, notably greater than 1.5/1.

The solution **AS** subjected to the process of the invention contains two elements **E1** and **E2** from among the 17 rare-earth metals, said rare-earth metals comprising 15 lanthanides: lanthanum; cerium; praseodymium; neodymium; promethium; samarium; europium; gadolinium; terbium; dysprosium; holmium; erbium; thulium; ytterbium and lutetium, and also scandium and yttrium.

According to one preferred embodiment, the two elements **E1** and **E2** are dysprosium and lanthanum, respectively. According to another preferred embodiment, the two elements **E1** and **E2** are europium and lanthanum, respectively. According to yet another preferred embodiment, the two elements **E1** and **E2** are yttrium and lanthanum, respectively.

For the purposes of the invention, the rare-earth elements are notably present in the solution in a cationic form.

Notably, the total concentration of elements among the rare-earth elements initially present in the solution **AS** ranges from 1 to 10 000 ppm by weight.

The dithiocarbamate salt used in step a) of the process of the invention has the formula: $R1R2NCS2^-M^+$, in which M is an alkali metal cation, the groups R1 and/or R2 are chosen from the group comprising a hydrogen atom, a methyl group, a linear, branched or cyclic, saturated or unsaturated, substituted or unsubstituted carbon chain including from 2 to 20 carbon atoms, which may include one or more heteroatoms chosen from nitrogen and oxygen, the groups R1 and R2 together may form a ring.

Preferentially, the cation M is sodium or potassium.

Advantageously, the dithiocarbamate salt is chosen from the alkali metal salts of the following compounds: piperazine dithiocarbamate, piperidine dithiocarbamate, cyclohexylamine dithiocarbamate, dimethyl dithiocarbamate, diethyl dithiocarbamate, dipropyl dithiocarbamate, dibutyl dithiocarbamate, ethylenediamine dithiocarbamate. Preferentially, this compound is piperazine dithiocarbamate.

Preferentially, the dithiocarbamate salt is potassium piperazine dithiocarbamate.

Preferentially, to perform step a) of the process of the invention, the dithiocarbamate salt is added to the aqueous solution in a concentration of between 0.5% and 60% by weight, **AS** being in the form of an aqueous solution.

In addition, the process of the invention may preferentially comprise two successive steps b1) and b2) between steps b) and c), said steps consisting in:

b1) adding to the solution obtained on conclusion of step a) a water-soluble polymer **P** with an average molecular weight of between 20 000 and 1 million daltons and stirring for at least 1 minute,

b2) adding to the solution obtained in step b1) a water-soluble polymer **P'** with an average molecular weight greater than 1 million daltons and stirring for at least 1 minute.

One of the advantages of performing steps b1) and b2) is a reduction in the time required for step c).

The term "polymer" means a natural polymer or a chemically modified natural polymer or a synthetic homopolymer or copolymer prepared from at least two different monomers.

Polymer **P** has a molecular weight of between 20 000 and 1 million daltons. Polymer **P'** has a molecular weight greater than or equal to 1 million daltons, preferentially between 1 and 40 million daltons, more preferentially between 3 and 30 million daltons. The term "molecular weight" means the weight-average molecular weight.

The molecular weight is determined by the intrinsic viscosity of the polymer. The intrinsic viscosity may be measured via methods known to those skilled in the art and can be calculated from the reduced viscosity values for different polymer concentrations by a graphical method consisting in plotting the reduced viscosity values (y-axis) against the concentration (x-axis) and extrapolating the curve to zero concentration.

The intrinsic viscosity value is plotted on the y-axis or using the least squares method. The molecular weight can then be determined via the Mark-Houwink equation:

[Math 1]

$$[\eta] = K\,M^\alpha$$

$[\eta]$ represents the intrinsic viscosity of the polymer determined via the method for measuring solution viscosity.
K represents an empirical constant.
M represents the molecular weight of the polymer.
$\alpha$ represents the Mark-Houwink coefficient.

K and $\alpha$ depend on the particular polymer-solvent system.

The term "water-soluble polymer" denotes a polymer which gives an aqueous solution without insoluble particles when dissolved with stirring at 25°C and at a concentration of 10 g.L$^{-1}$ in deionized water.

The water-soluble polymers **P** or **P'** may be natural polymers or chemically modified natural polymers or synthetic polymers or semi-synthetic (or semi-natural) polymers.

Advantageously, polymer **P** is chosen from poly(aluminium chloride), the product of polycondensation reaction between epichlorohydrin and dimethylamine, homopolymers or copolymers of diallyldimethylammonium halide.

Polymer **P'** is preferentially synthetic and made up of at least one anionic hydrophilic monomer and/or at least one cationic hydrophilic monomer and/or at least one nonionic hydrophilic monomer,

- the nonionic hydrophilic monomer(s) being chosen from the group comprising water-soluble vinyl monomers such as acrylamide, methacrylamide, N-alkylacrylamides, N-alkylmethacrylamides, N,N-dialkylacrylamides (for example N,N-dimethylacrylamide or N,N-diethylacrylamide), N,N-dialkylmethacrylamides, alkoxylated acrylic acid esters, alkoxylated methacrylic acid esters, N-vinylpyrrolidone, N-methylol(meth)acrylamide, N-vinylcaprolactam, N-vinylformamide (NVF), N-vinylacetamide, N-vinylimidazole, N-vinylsuccinimide, acryloylmorpholine (ACMO), glycidyl methacrylate, glyceryl methacrylate, diacetoneacrylamide, methacrylic anhydride, acrylonitrile, maleic anhydride, itaconic anhydride, itaconamide, vinylpyridine, hydroxyalkyl (meth)acrylates, thioalkyl (meth)acrylates, isoprenol and alkoxylated derivatives thereof, hydroxyethyl (meth)acrylates and alkoxylated derivatives thereof, hydroxypropyl acrylate and alkoxylated derivatives thereof, vinyl acetate, and mixtures thereof, the alkyl groups being C1-C3 hydrocarbon-based chains;
- the anionic hydrophilic monomer(s) being chosen from the monomers acrylic acid, methacrylic acid, dimethylacrylic acid, itaconic acid, C1-C3 hemiesters of itaconic acid, acryloyl chloride, crotonic acid, maleic acid, fumaric acid, 3-acrylamido-3-methylbutanoic acid, vinylsulfonic acid, vinylphosphonic acid, allylsulfonic acid, methallylsulfonic acid, 2-methylidenepropane-1,3-disulfonic acid, 2-sulfoethyl methacrylate, sulfopropyl methacrylate, sulfopropyl acrylate, allylphosphonic acid, ethylene glycol methacrylate phosphate, styrenesulfonic acid, 2-acrylamido-2-methylpropanesulfonic acid (ATBS), 2-acrylamido-2-methylpropanedisulfonic acid, 3-allyloxy-2-hydroxypropanesulfonic acid, diethylallyl phosphonate, carboxyethyl acrylate; water-soluble salts of all these monomers, such as alkali metal, alkaline-earth metal or ammonium salts thereof; and mixtures thereof;
- the cationic hydrophilic monomer(s) being chosen from diallyldialkylammonium salts such as diallyldimethylammonium chloride (DADMAC); acidified or quaternized salts of dialkylaminoalkyl(meth)acrylamides, for instance methacrylamidopropyltrimethylammonium chloride (MAPTAC), acrylamidopropyltrimethylammonium chloride (APTAC), acidified or quaternized salts of dialkylaminoalkyl acrylate, such as quaternized or salified dimethylaminoethyl acrylate (ADAME), acidified or quaternized salts of dialkylaminoalkyl methacrylate, such as quaternized or salified dimethylaminoethyl methacrylate (MADAME), and mixtures thereof.

The term "hydrophilic monomer" denotes a monomer which has an octanol/water partition coefficient Kow, characterized by log (Kow, inferior or equal to 1, in which the Kow partition coefficient is determined at 25°C in an octanol/water mixture having a volume ratio of 1/1, at a pH of between 6 and 8.

[Math 2]

$$K_{ow} = \frac{[monomer]_{octanol}}{[monomer]_{water}}$$

The polymer P' may have a linear, branched, star- or comb-shaped structure. This structure may be obtained according to the general knowledge of a person skilled in the art.

Polymers P and P' may be added during steps b1) and b2) in various forms, notably in liquid form, for example as a solution, emulsion, dispersion or suspension, or in solid form, independently of each other. The polymers may be in the form of an aqueous solution, an inverse emulsion (water-in-oil), an aqueous suspension, a powder or a dispersion of the polymer in oil. Polymer P is preferably in the form of an aqueous solution. Polymer P' is advantageously in the form of a powder or an inverse emulsion.

In general, the water-soluble polymers **P** and **P'** do not require the development of any particular polymerization process. Specifically, they can be obtained via any polymerization technique well known to those skilled in the art. These may notably include solution polymerization; gel polymerization; precipitation polymerization; emulsion polymerization (aqueous or inverse); suspension polymerization; reactive extrusion polymerization; water-in-water polymerization; or micellar polymerization.

The amount of water-soluble polymers **P** and **P'** added during steps b1) and b2) is notably from 1 to 10 000 ppm by weight in the solution obtained via the process in step a) or b1), preferentially between 10 and 5000 ppm by weight.

For step b) of the process of the invention, the aqueous solution obtained in step a) is stirred for at least 1 minute. Preferentially, this solution is stirred for between 1 and 5 minutes. A person skilled in the art knows how to choose the appropriate stirring means. For steps b1) and/or b2), the stirring times are of the same order of magnitude as for step b).

For step c) of the process of the invention, stirring of the solution obtained from step b) is stopped to wait at least 5 minutes, notably 10 minutes or 15 minutes, for the formation of a suspension **S**. Preferentially, the waiting time for the formation of the suspension **S** is between 5 minutes and 2 hours.

For step d) of the process of the invention, a person skilled in the art knows how to choose the appropriate liquid/solid separation method. By way of example, this method may be a filtration or decantation step.

For step a) of the process of the invention, the stoichiometric dose corresponding to the ratio between the anionic charge density of the dithiocarbamate salt, notably (PIP-CS2), and the total cationic charge density of the metal elements in the solution **AS** is between 100% and 500%, more preferentially between 200% and 500% and even more preferentially between 250% and 500%.

The amount of dithiocarbamate salt added in steps a) is determined as a function of the cationic charge density of the aqueous solution **AS**. More precisely, it is determined such that the anionic charges of the dithiocarbamate salt neutralize the cationic charges of the metal elements present in the aqueous solution **AS**.

The aqueous solution **AS** is analysed by Inductively Coupled Plasma - Optical Emission Spectrometry (ICP-OES) to determine the content of each metal element making up the solution. These contents, weighted by the molecular weight of each metal element, allow the cationic charge density of the solution to be determined.

This cationic charge density allows calculation of the amount of dithiocarbamate salt to be used to neutralize all the cationic charges of the metal elements at an optimum content of 100%. The stoichiometric dose thus corresponds to the ratio between the anionic charge density of the dithiocarbamate salt and the cationic charge density of the metal element solution. If required, under- or over-dosing may be applied relative to this 100% value.

The invention and the advantages thereof will be seen more clearly in the light of the following examples and figures.

[Fig. 1]

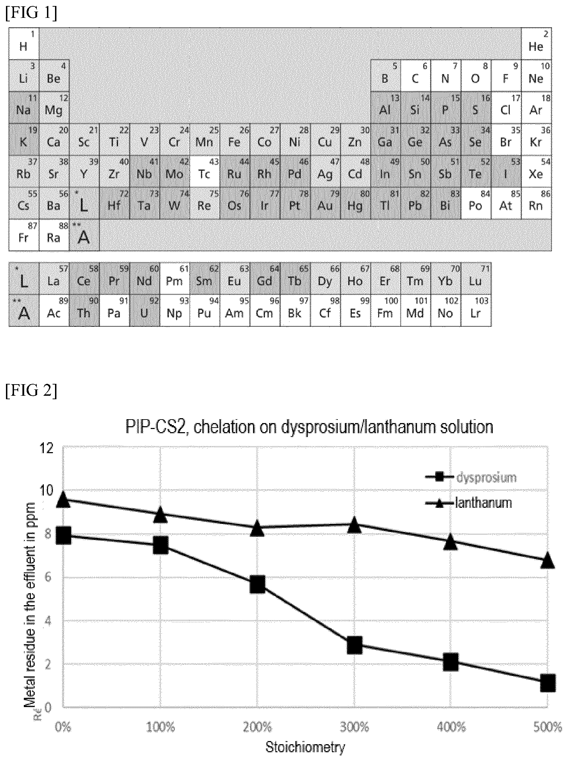

Figure 1 represents Mendeleyev's Periodic Table. The shaded cells represent the elements that can be analysed using ICP-OES technology.

[Fig. 2]
Figure 2 represents the evolution of the concentration of dysprosium and lanthanum in the filtrate obtained from the solution treated with PIP-CS2, according to Example 2. The x-axis represents the stoichiometry, expressed as a percentage, of the PIP-CS2 added, while the y-axis represents the concentration of cations in the solution, expressed in ppm.

[Fig. 3]

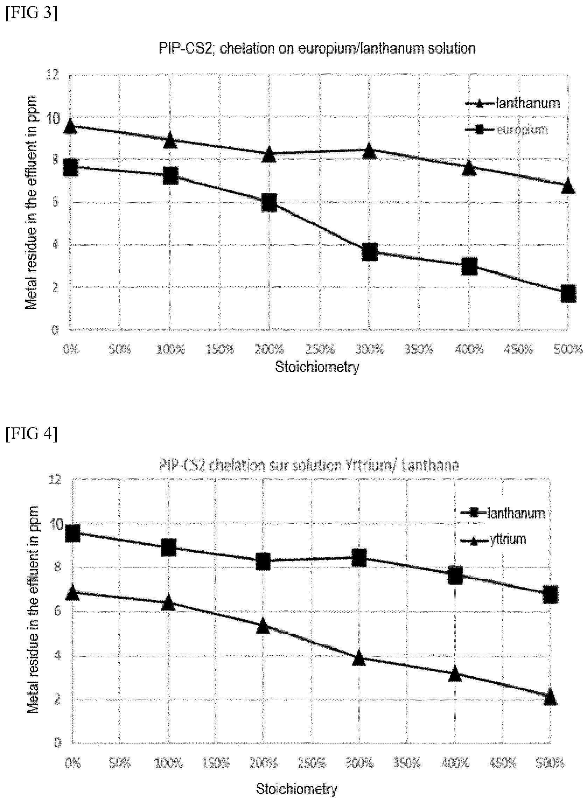

Figure 3 represents the evolution of the concentration of europium and lanthanum in the filtrate obtained from the solution treated with PIP-CS2, according to Example 3. The x-axis represents the stoichiometry, expressed as a percentage, of the PIP-CS2 added, while the y-axis represents the concentration of cations in the solution, expressed in ppm.

[Fig. 4]
Figure 4 represents the evolution of the concentration of yttrium and lanthanum in the filtrate obtained from the solution treated with PIP-CS2, according to Example 4. The x-axis represents the stoichiometry, expressed as a percentage, of the PIP-CS2 added, while the y-axis represents the concentration of cations in the solution, expressed in ppm.

**EXAMPLES:**

***ICP-OES (Inductively Coupled Plasma - Optical Emission Spectrometry) analysis method***:

ICP-OES technology is a technique that allows analysis of most of the elements in Mendeleyev's Periodic Table (Figure 1).

The principle of ICP-OES consists in introducing a sample including the analytes of interest, which is then ionized by an argon plasma. By definition, a plasma is a totally ionized but electrically neutral gas (presence of free electrons and ions). It may be likened to a flame, with a temperature that may be up to 10 000 K.

The sample first enters a chamber in the liquid state and in the form of an aerosol. The function of the chamber is to generate a homogeneous aerosol at the outlet, which is carried to the torch by an argon stream. The energy then afforded by the plasma allows vaporization, atomization and, finally, ionization of the various elements in the injected sample.

These different elements (atoms) will thus absorb the photons generated by the plasma, causing the electrons in these elements to move to more energetic electron shells. Once excited, the atoms lose energy by emitting one or more photons, as a function of their state of excitation. These photons are characterized by an energy that may be related to a wavelength λ according to the Planck-Einstein relationship $E = {h.c}/{\lambda}$ . (E: photon energy (in joules), h: Planck's

constant ($6.63 \times 10^{-34}$ J.s), c: speed of light in a vacuum, $\lambda$: wavelength (in meter) of the electromagnetic wave associated with the photon under consideration). By means of the optical sensors and detectors of the measuring apparatus, these wavelengths are identified, thus allowing the compounds present to be identified and quantified.

As a function of each element under consideration and taking into account our particular matrices, here is the protocol put in place:

Preparation of the samples:

- Control sample: 1 mL of the solution containing 10 ppm of the salt of the element is diluted with 9 mL of nitric acid at 5% by weight in water.
- Samples after chelation: two drops of nitric acid at 69% by weight are added to 10 mL of the samples.

The corresponding solutions are injected into the ICP-OES 5800 (Agilent), using the following parameters:

- 1.2 kW RF ICP power
- carrier gas: argon flow rate of 0.7 L/min.

The elements La and Dy were analysed in axial view. The elements Y and Eu were analysed in radial view with a measuring height of 8 mm. Calibration from 0.1 ppm to 5 ppm was obtained using the standard Agilent solution for each element.

### Determination of the anionic charge density of a dithiocarbamate salt of formula: $R_1R_2NCS_2^-M^+$ (referred to as: PIP-CS2)

The charge density of the compound PIP-CS2 is calculated from the colloidal charge (meq/g), determined by colloidal assay using methyl glycol chitosan (MGC) and polyvinyl sulfate potassium (PVSK).

A solution containing 5 g/L of (PIP-CS2) is prepared by diluting, with magnetic stirring, 1.00 g of (PIP-CS2) equivalent (dry extract) in a 200 mL beaker, the amount of deionized water added being a function of the initial PIP-CS2 concentration. When the 5 g/L PIP-CS2 solution is homogeneous, weigh out 0.25 g of solution and add 100 mL of deionized water. Adjust the pH precisely to the range 10.4-10.6 with 0.1N acid or sodium hydroxide. With stirring, add exactly 5 mL of MGC (1/200 N), then three drops of toluidine blue and assay with PVSK (1/400 N).

The equivalence point is obtained when the blue colour changes to violet and remains violet for 20 seconds, the amount in millilitres of PVSK introduced is noted A.

The same measurement is performed without the addition of (PIP-CS2), and the amount in millilitres of PVSK is noted B.

The anionic charge density is calculated using the following formula:

$$[\text{Math 3}]$$

$$C(\text{meq/g}) = (B-A) \times N_{PVSK} / (5 \times m \times 10^{-3}),$$

in which m = mass of PIP-CS2 solution at 5 g/L

$N_{PVSK}$ = normality of PVSK solution, = f / 400, with factor f given by the supplier WAKO.

### Stoichiometric assay of an aqueous solution containing metal elements

The solution is analysed by ICP-OES to determine the content of each metal element making up the solution. These contents, weighted by the molecular weight of each metal element, allow the cationic charge density of the solution to be determined.

This cationic charge density allows calculation of the amount of (PIP-CS2) to be used to neutralize all the cationic charges of the metal elements at an optimum content of 100%. The stoichiometric dose thus corresponds to the ratio between the anionic charge density of (PIP-CS2) and the cationic charge density of the metal element solution. If required, under- or over-dosing may be applied relative to this optimum 100% value.

Example to clarify the calculation of the stoichiometric percentage:

For an aqueous solution (1000 g) containing 20 ppm copper(II), the amount of (PIP-CS2) (charge density: 2.55 meq/g) to have 100% of stoichiometry is determined according to the following formula:

[Math 4]

$$Q = (TS/100) * (Cmetal * VALmetal) / (MWmetal * D /1000)$$

With TS = target stoichiometry (%)
Q = amount of (PIP-CS2) to be added (in ppm)
Cmetal = metal concentration (in ppm)
VALmetal = valence of the metal
MWmetal: metal molecular mass (g/mol)
D = charge density of the compound (PIP-CS2) (meq/g)

Thus, for 100% of stoichiometry, 247 ppm of (PIP-CS2) are required.

**Example *1: Synthesis of a compound (PIP-CS2) in potassium salt form***

51 g of water, 288 g of potassium hydroxide (50% by weight in water) and 112 g of solid piperazine (PIP) are introduced into a 1L double-jacketed reactor, fitted with a motor, a stirring paddle and a condenser. The resulting mixture is mixed for 15 minutes and maintained at 35°C by means of a cold generator via the reactor's double-jacket.

A dropping funnel is filled with 198 g of $CS_2$ and fitted to the 1L reactor. $CS_2$ is thus added to the reactor dropwise over a period of 80 min. The temperature of the reaction medium is maintained at 40°C, and water is fed into the condenser to prevent loss of $CS_2$. The reaction medium turns reddish, reflecting the progress of the reaction. After adding $CS_2$, the medium is maintained at 40°C with stirring for 120 min and then cooled to 25°C.

After adding 350 g of deionized water, the solution obtained is an aqueous solution containing 40% by weight of compound (PIP-CS2).

**Treatments for solutions containing metal elements**

**Examples 2:**

To a 2L volumetric flask containing a Teflon®-coated magnetic bar, 2L of deionized water in which are dissolved 41 mg of dysprosium chloride hexahydrate ($DyCl_3·6H_2O$) and 53.5 mg of lanthanum chloride heptahydrate ($LaCl_3·7H_2O$), so as to obtain a solution containing 10 ppm of dysprosium salt and 10 ppm of lanthanum salt are added. ICP-OES analysis is performed to determine the initial amount of each element in the solution (so as to avoid variability in hydration from one salt to another depending on the storage conditions).

The (PIP-CS2) solution (Example 1) is diluted to 1% (by weight) by mixing 150 mg thereof with 6 g of deionized water.

The aqueous solution containing dysprosium and lanthanum is stirred moderately, and the diluted (PIP-CS2) solution is added (amount adjusted to obtain the desired stoichiometry of (PIP-CS2)).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the elements dysprosium and lanthanum. The analysis of the filtrate during the treatment is represented in Figure 2.

1998.5 g of filtrate solution are recovered (after filtration with a stoichiometry of 500%). The filtrate contains 1.1 ppm of dysprosium and 6.8 ppm of lanthanum. On the filter, 1.5 g of solid are recovered. It contains 9200 ppm of dysprosium and 3600 ppm of lanthanum (analysis by ICP-OES).

The compound (PIP-CS2) thus allows dysprosium to be enriched in the precipitate formed.

**Example 3:**

To a 2L volumetric flask containing a Teflon®-coated magnetic bar, 2L of deionized water in which are dissolved 41 mg of hydrated europium chloride ($EuCl_3·xH_2O$) and 53.5 mg of lanthanum chloride heptahydrate ($LaCl_3.7H_2O$), so as

to obtain a solution containing 10 ppm of europium salt and 10 ppm of lanthanum salt are added. ICP-OES analysis is performed to determine the initial amount of each element in the solution (so as to avoid variability in hydration from one salt to another depending on the storage conditions).

The (PIP-CS2) solution (Example 1) is diluted to 1% (by weight) by mixing 160 mg thereof with 6.17 g of deionized water.

The aqueous solution containing europium and lanthanum is stirred moderately, and the diluted (PIP-CS2) solution is added (amount adjusted to obtain the desired stoichiometry of (PIP-CS2)).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the elements europium and lanthanum. The analysis of the filtrate during the treatment is represented in Figure 3.

1998.3 g of filtrate solution are recovered (after filtration with a stoichiometry of 500%). The filtrate contains 1.73 ppm of europium and 6.8 ppm of lanthanum. On the filter, 1.7 g of solid are recovered. It contains 3176 ppm of lanthanum and 7141 ppm of europium (analysis by ICP-OES).

The compound (PIP-CS2) thus allows europium to be enriched in the precipitate formed.

**Examples 4:**

To a 2L volumetric flask containing a Teflon-coated magnetic bar, 2L of deionized water in which are dissolved 49.5 mg of hydrated yttrium chloride ($YI_3 \cdot xH_2O$) and 53.5 mg of lanthanum chloride heptahydrate ($LaCl_3.7H_2O$), so as to obtain a solution containing 10 ppm of yttrium salt and 10 ppm of lanthanum equivalent salt are added. ICP-OES analysis is performed to determine the initial amount of each element in the solution (so as to avoid variability in hydration from one salt to another depending on the storage conditions).

The (PIP-CS2) solution (Example 1) is diluted to 1% (by weight) by mixing 210 mg thereof with 8.25 g of deionized water.

The aqueous solution containing yttrium and lanthanum is stirred moderately, and the diluted (PIP-CS2) solution is added (amount adjusted to obtain the desired stoichiometry of (PIP-CS2)).

The mixture is kept stirring for 60 sec and a precipitate appears.

Stirring is stopped and the suspension is left to settle naturally for 60 min. The solution obtained is filtered (0.45 μ Sartorius filter) to perform a liquid-solid separation.

The filtrate is analysed by ICP-OES to measure the concentration of the elements yttrium and lanthanum. The analysis of the filtrate during the treatment is represented in Figure 4.

1997.9 g of filtrate solution are recovered (after filtration with a stoichiometry of 500%). The filtrate contains 2.15 ppm of yttrium and 6.8 ppm of lanthanum.

On the filter, 2.12 g of solid are recovered. It contains 2665 ppm of lanthanum and 4504 ppm of yttrium (analysis by ICP-OES).

The compound (PIP-CS2) thus allows yttrium to be enriched in the precipitate formed.

***Examples 5:***

The operating conditions of Example 2 are repeated. The (PIP-CS2) solution (Example 1) is diluted to 1% (by weight) by mixing 150 mg thereof with 6 g of deionized water.

The aqueous solution containing dysprosium and lanthanum is stirred moderately, and the diluted polymer (PIP-CS2) solution is added (amount adjusted to obtain 100% of stoichiometry of (PIP-CS2)). The solution is stirred for 1 minute. 0.5 mL of a solution containing 1% of coagulant PAC 18 (polyaluminium chloride, average molecular weight between 20 000 and 1 million daltons) is then added and the solution is stirred for 1 minute. Finally, 0.5 mL of a solution containing 0.5 g/L of anionic flocculant (Flopam AN 934 VHM, average molecular weight greater than 1 million daltons) is added and the solution is left stirring for 1 minute.

The mixture is kept stirring at 200 rpm for 60 sec and then slowed down to 50 rpm for 5 min to form flocs.

Stirring is stopped and the suspension is left to settle naturally for 10 min. The solution obtained is filtered (0.45 μ Sartorius filter) to perform a liquid-solid separation.

The dysprosium and lanthanum contents in the solid and in the filtrate remain equivalent to those obtained in Example 2. However, the treatment times (sedimentation, liquid-solid separation) are shorter than those in Example 2.

**Claims**

1. Process for separating two elements **E1** and **E2,** chosen from rare-earth metals, in admixture in aqueous solution **AS,** said process involving the following successive steps:

   a) adding to the aqueous solution **AS** at least one dithiocarbamate salt of formula: $R_1R_2NCS_2^- M^+$, in which M is an alkali metal cation, the groups R1 and/or R2 are chosen from the group comprising a hydrogen atom, a methyl group, a linear, branched or cyclic, saturated or unsaturated, substituted or unsubstituted carbon chain including from 2 to 20 carbon atoms, which may include one or more heteroatoms chosen from nitrogen and oxygen, the groups R1 and R2 together may form a ring;
   b) stirring the aqueous solution obtained in step a) for at least 1 minute;
   c) stopping the stirring and waiting at least 5 minutes for a suspension **S** to form;
   d) performing a liquid/solid separation on the suspension **S** to obtain a solid **SO** predominately containing element **E1** relative to element **E2** and an aqueous solution **AS'** predominantly containing element **E2** relative to element **E1.**

2. Process according to Claim 1, **characterized in that** the cation M is sodium or potassium.

3. Process according to the preceding claims, **characterized in that** the dithiocarbamate salt is chosen from the alkali metal salts of the following compounds: piperazine dithiocarbamate, piperidine dithiocarbamate, cyclohexylamine dithiocarbamate, dimethyl dithiocarbamate, diethyl dithiocarbamate, dipropyl dithiocarbamate, dibutyl dithiocarbamate, ethylenediamine dithiocarbamate.

4. Process according to Claims 1 and 2, **characterized in that** the dithiocarbamate salt is potassium piperazine dithiocarbamate.

5. Process according to Claim 1, **characterized in that**, for step a), the dithiocarbamate salt is in aqueous solution at a concentration of between 0.5% and 60% by weight.

6. Process according to the preceding claims, **characterized in that** the two elements **E1** and **E2** are dysprosium and lanthanum, respectively.

7. Process according to the preceding claims, **characterized in that** the two elements **E1** and **E2** are europium and lanthanum, respectively.

8. Process according to the preceding claims, **characterized in that** the two elements **E1** and **E2** are yttrium and lanthanum, respectively.

9. Process according to the preceding claims, **characterized in that**, between steps b) and c), it comprises two successive steps b1) and b2), said steps consisting in:

   b1) adding to the solution a water-soluble polymer **P** with an average molecular weight of between 20 000 and 1 million daltons and leaving to stir for at least 1 minute.
   b2) adding to the solution a water-soluble polymer **P'** with an average molecular weight of greater than 1 million daltons and leaving to stir for at least 1 minute.

10. Process according to the preceding claims, **characterized in that**, for step a) of the process, the stoichiometric dose corresponding to the ratio between the anionic charge density of the dithiocarbamate salt and the total cationic charge density of the rare-earth metals in solution AS is between 100% and 500%.

[FIG 1]

[FIG 2]

PIP-CS2, chelation on dysprosium/lanthanum solution

EP 4 660 332 A1

[FIG 3]

PIP-CS2; chelation on europium/lanthanum solution

[FIG 4]

PIP-CS2 chelation sur solution Yttrium/ Lanthane

**EUROPEAN SEARCH REPORT**

Europäisches
Patentamt
European
Patent Office
Office européen
des brevets

Application Number

EP 25 18 0263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALLAM EMAN M. ET AL: "Rare Earth Group Separation after Extraction Using Sodium Diethyldithiocarbamate/Polyvinyl Chloride from Lamprophyre Dykes Leachate", MATER, vol. 15, no. 3, 5 February 2022 (2022-02-05), page 1211, XP093240138, ISSN: 1996-1944, DOI: 10.3390/ma15031211 * "3.6.1 Recovery of REEs from leach liquor"; page 17; figure 11; table 6 * | 1-10 | INV. C22B3/16 C01F17/10 C01F17/17 C22B7/00 C22B59/00 C22B3/20 |
| A | FR 2 614 213 A1 (CENTRAL GLASS CO LTD [JP]) 28 October 1988 (1988-10-28) * the whole document * | 1-10 | |
| A | JP 5 401497 B2 (HITACHI LTD) 29 January 2014 (2014-01-29) * the whole document * | 1-10 | |
| A | US 11 845 670 B2 (UNIV MISSOURI [US]) 19 December 2023 (2023-12-19) * the whole document * | 1-10 | TECHNICAL FIELDS SEARCHED (IPC) C22B C01F |
| A | CN 103 917 672 A (SUMITOMO METAL MINING CO) 9 July 2014 (2014-07-09) * the whole document * | 1-10 | |
| A | CN 103 443 305 A (SUMITOMO METAL MINING CO) 11 December 2013 (2013-12-11) * the whole document * | 1-10 | |
| A | JP 2009 083082 A (AGC SEIMI CHEMICAL CO LTD) 23 April 2009 (2009-04-23) * the whole document * | 1-10 | |

-/--

The present search report has been drawn up for all claims

| Place of search | Date of completion of the search | Examiner |
|---|---|---|
| The Hague | 8 August 2025 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 18 0263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 118 103 533 A (COMMISSARIAT ENERGIE ATOMIQUE; CENTRE NAT RECH SCIENT ET AL.) 28 May 2024 (2024-05-28) * the whole document * | 1-10 | |
| A | JP 2007 231382 A (MITSUI MINING & SMELTING CO) 13 September 2007 (2007-09-13) * the whole document * | 1-10 | |

TECHNICAL FIELDS
SEARCHED (IPC)

The present search report has been drawn up for all claims

| Place of search | Date of completion of the search | Examiner |
|---|---|---|
| The Hague | 8 August 2025 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 0263

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2025

| Patent document cited in search report | | Publication date | Patent family member(s) | | Publication date |
|---|---|---|---|---|---|
| FR 2614213 | A1 | 28-10-1988 | DE | 3813454 A1 | 03-11-1988 |
| | | | FR | 2614213 A1 | 28-10-1988 |
| | | | GB | 2204861 A | 23-11-1988 |
| JP 5401497 | B2 | 29-01-2014 | CN | 103443304 A | 11-12-2013 |
| | | | JP | 5401497 B2 | 29-01-2014 |
| | | | JP | 2012219326 A | 12-11-2012 |
| | | | WO | 2012137727 A1 | 11-10-2012 |
| US 11845670 | B2 | 19-12-2023 | US | 2022212945 A1 | 07-07-2022 |
| | | | US | 2024076195 A1 | 07-03-2024 |
| | | | WO | 2020236550 A1 | 26-11-2020 |
| CN 103917672 | A | 09-07-2014 | CN | 103917672 A | 09-07-2014 |
| | | | EP | 2781609 A1 | 24-09-2014 |
| | | | JP | 5310825 B2 | 09-10-2013 |
| | | | JP | 2013104098 A | 30-05-2013 |
| | | | US | 2014322107 A1 | 30-10-2014 |
| | | | WO | 2013073376 A1 | 23-05-2013 |
| CN 103443305 | A | 11-12-2013 | CN | 103443305 A | 11-12-2013 |
| | | | JP | 5440569 B2 | 12-03-2014 |
| | | | JP | 2012229483 A | 22-11-2012 |
| | | | WO | 2012140998 A1 | 18-10-2012 |
| JP 2009083082 | A | 23-04-2009 | JP | 5086021 B2 | 28-11-2012 |
| | | | JP | 2009083082 A | 23-04-2009 |
| | | | TW | 200925112 A | 16-06-2009 |
| CN 118103533 | A | 28-05-2024 | CN | 118103533 A | 28-05-2024 |
| | | | EP | 4177365 A1 | 10-05-2023 |
| | | | EP | 4426871 A1 | 11-09-2024 |
| | | | JP | 2024540426 A | 31-10-2024 |
| | | | KR | 20240104092 A | 04-07-2024 |
| | | | US | 2024417826 A1 | 19-12-2024 |
| | | | WO | 2023079055 A1 | 11-05-2023 |
| JP 2007231382 | A | 13-09-2007 | JP | 4730903 B2 | 20-07-2011 |
| | | | JP | 2007231382 A | 13-09-2007 |

For more details about this annex : see Official Journal of the European Patent Office, No. 12/82

**EP 4 660 332 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2614213
- JP 5401497 B
- JP 5836349 B
- JP 6789910 B